# EUROPEAN PATENT SPECIFICATION

(11) **EP 1 685 941 B1**
(45) Date of publication and mention of the grant of the patent: **13.06.2012**
(21) Application number: 06000704.4
(22) Date of filing: 13.01.2006
(51) Int. Cl.: B29C 47/04, B29C 47/56

(54) **Extrusion head adaptor for blow-moulding of parisons**
Adaptor für einen Extrusionskopf für das Blasformen von Vorformlingen
Adapteur pour tête d'extrusion pour moulage par soufflage de paraisons

(30) Priority: 26.01.2005 IT MI20050103
(43) Date of publication of application: 02.08.2006
(73) Proprietor: Uniloy Milacron S.R.L., 20013 Magenta (MI) (IT)
(72) Inventor: Bertolotti, Gianluca, Ozzero, MI (IT)
(74) Representative: Petruzziello, Aldo

(56) References cited:
- GB-A- 2 191 145
- US-A- 5 221 540
- US-A- 6 090 338

## Description

The present invention refers to the field of blow-moulding machines for blow-moulding of polymer materials with a continuous extrusion head.

A continuous extrusion head for blow-moulding of parisons always has some substantial differences according to the particular application for which it is intended.

In the case of continuous heads for blow-moulding, applications can be divided into the following main classes:
- Normal parison (for conventional hollow blow-moulded products, such as bottles and the like).
- Parison with right view stripe (for blow-moulded products with a transparent strip on the right-hand side), such as, for example, containers for liquids in which the level of the liquid is to be viewed.
- Parison with left view stripe (for blow-moulded products with a view stripe on the left-hand side).
- Deco parison with deco (for blow-moulded products with coextrusion of two layers of different materials), such as for example containers with soft-to-touch material on the outside and harder, stronger material on the inside.
- Parison with multi-stripes (for products blow-moulded with coloured vertical stripes for a greater aesthetic effect).

These different types of parison currently present the need for a dedicated head. Each product change involves an invasive, substantial modification of the head.

Continuous extrusion heads currently have very rigid configurations. In fact, once the head configuration has been defined, it is difficult and laborious to pass to one of the other above-listed configurations except with modifications and replacements of multiple parts with the result of a great waste of time and high replacement costs.

US 5 221 540, which discloses the features of the preamble of claim 1, describes an extrusion head comprising an adaptor device having only one inlet channel formed as a closed loop (or fully circular) passage.

The object of the present invention is to eliminate the drawbacks of the prior art, providing a continuous extrusion head adaptor device for blow-moulding of parisons that makes it possible to pass from one production configuration to another without having to change the entire extrusion head.

This object is achieved in accordance with the invention with the continuous extrusion head adaptor device whose characteristics are listed in the characterising part of appended independent claim 1.

Other embodiments of the invention are apparent from the dependent claims.

The adaptor device according to the invention is suitable for application to a continuous extrusion head for blow-moulding of parisons. The extrusion head comprises:
- a main extruder which, though a distributor, feeds the molten material into a tubular space defined by a core or male disposed inside the extrusion head, and
- a secondary extruder which, though a distributor, feeds the molten material into said adaptor device.

The adaptor device has a substantially annular shape, is mounted removably in the extrusion head, and is disposed around said core of the extrusion head, so as to form a space for passage of the molten material between the inner side surface thereof and the outer side surface of the core.

The adaptor device further comprises at least one inlet supplied by the distributor of said secondary extruder and communicating with at least one outlet opening into said space formed by the adaptor device and the core of the extrusion head.

Such an adaptor device presents various advantages. In fact it can be configured according to the type of production to be obtained and is easy and rapid to mount and remove, without the need to intervene on other parts of the extrusion head.

Further characteristics of the invention will be made clearer by the detailed description that follows, referring to purely exemplifying and therefore non-limiting embodiments thereof, illustrated in the appended drawings, in which:
Figure 1 is side elevation view of an extrusion head in which the adaptor device according to the invention is illustrated diagrammatically;
Figure 2 is an axial sectional view taken along the sectional plane II-II of Figure 1;
Figure 3 is a perspective view of an adaptor device which is not part of the invention, which can be used for production of "deco type" coextruded parisons;
Figure 4 is an exploded perspective view of the adaptor device of Figure 3;
Figure 5 is a view of the adaptor device of Figure 4 rotated through 180°;
Figure 6 is a bottom plan view of the top element of the adaptor device of Figure 3;
Figure 7 is a perspective view of an adaptor device which is not part of the invention, which can be used for production of coextruded "multi-stripe type" parisons;
Figure 8 is a perspective view illustrating the inner part of the top element of the adaptor device of Figure 7;
Figure 9 is a perspective view adaptor device according to the state of the art which can be used for production of coextruded parisons of the "right view stripe type";
Figure 10 is a sectional view, partially broken away, taken along the sectional plane X-X of Figure 9;
Figure 11 is a sectional view, partially broken away, taken along the sectional plane XI-XI of Figure 10; and
Figure 12 is a perspective view of an adaptor device according to the invention, which can be used for production of coextruded parisons of the "right or left view stripe type".

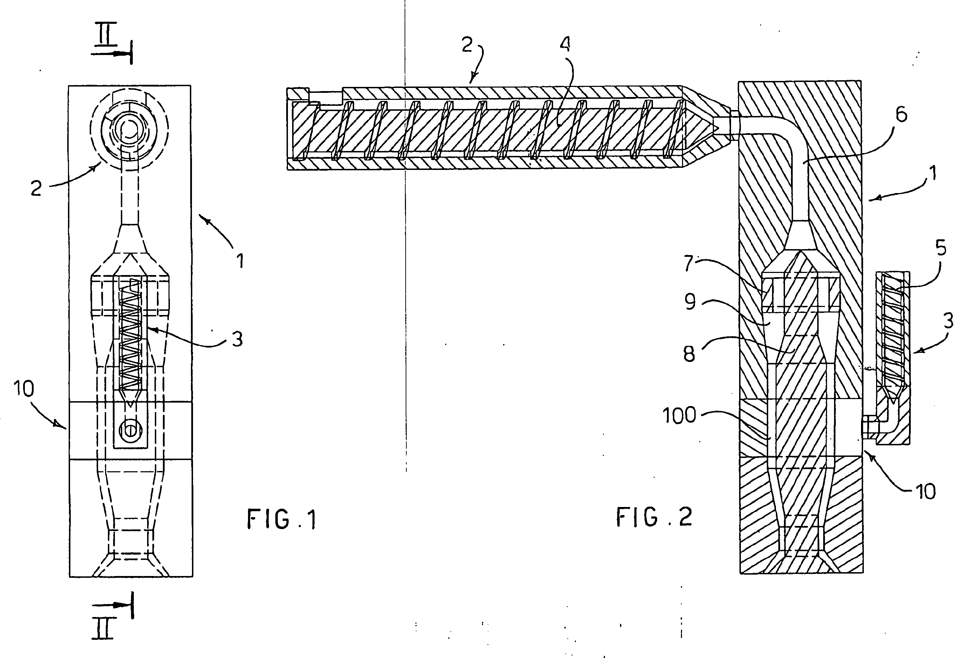

With reference to Figures 1 and 2 a continuous extrusion head designated as a whole by reference numeral 1 is illustrated.

Associated with the head 1 are a main extruder 2 and a secondary extruder 3. The main extruder 2 has an extrusion screw 4 disposed in the top part of the head 1 with a horizontal axis. The secondary extruder 3 has a smaller extrusion screw 5 disposed in the central part of the head with a vertical axis.

The molten material is fed to the main extruder 2 in an upturned L-shaped inlet duct 6 formed in the top part of the head 1. The inlet duct 6 leads to a distributor 7 which distributes the molten material into a cylindrical space 9 defined by means of a core or male 8 disposed axially in the head 1. In this manner the molten material in the space 9 takes on the typical tubular shape of the parison.

The secondary extruder 3 feeds the molten material towards an inlet duct and a distributor (not shown in the figures) formed in the central part of the head 1. The distributor of the secondary extruder 3 distributes the molten material into an adaptor device 10 mounted removeably in the extrusion head 1.

The adaptor device 10 has a substantially annular shape and is disposed around the core 8 of the extrusion head 1. In this manner, an annular space 100, communicating with the cylindrical space 9 through which the plastic material coming from the main extruder 2 passes, is defined between the inner side surface of the adaptor device 10 and the outer side surface of the core 8.

In any case, the adaptor device 10 has outlet ducts which open into the space 100 to achieve coextrusion of the molten material coming from the main extruder 2 and the molten material coming from the secondary extruder 3.

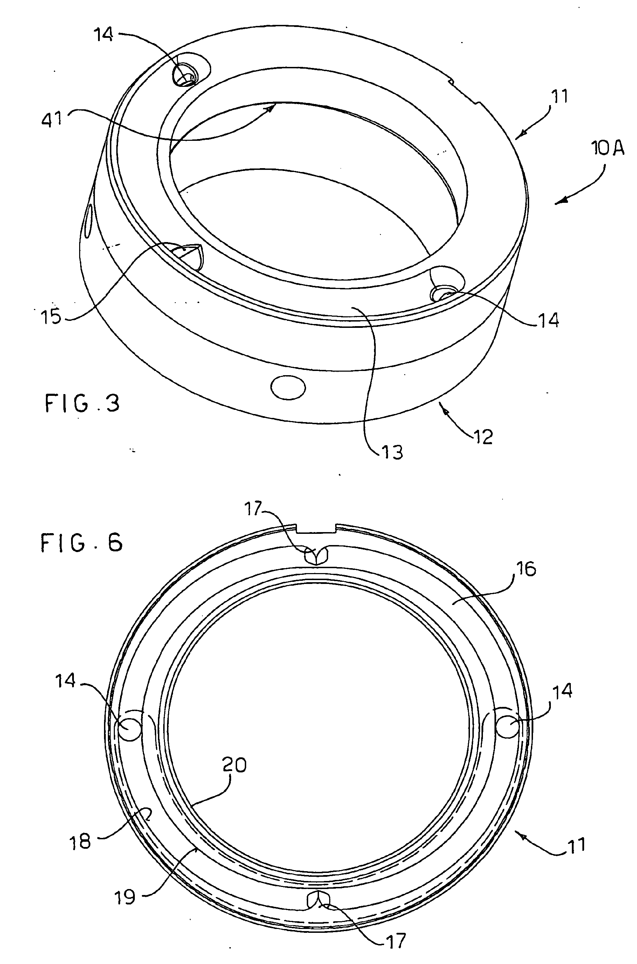

Figures 3 - 6 show an adaptor device designated as a whole with reference numeral 10A. The adaptor device 10A can be used for production of "deco type" coextruded parisons, therefore it must be able to provide an outer tubular layer of plastic material which is superimposed on the inner tubular layer of plastic material coming form the main extruder 2.

The adaptor device 10A comprises a top annular element 11 and a bottom annular element 12 which can be superimposed on each other and coupled together.

The top annular element 11 comprises an inlet channel 13 formed in the top surface thereof. The inlet channel 13 extends for an arc of a circle with an angle of 180° and has at its ends two inlet holes 14 with vertical axes, disposed in diametrically opposite positions.

In the central part of the inlet channel 13 is formed a cusp or wedge 15 with its tip facing upward and disposed at an angular distance of 90° from the two inlet holes 14, so as to divide the channel 13 into two equal portions. The cusp 15 is disposed beneath the inlet duct for the molten material coming from the auxiliary extruder 3, therefore it has the function of distributing the molten material equally into the two portions of the channel 13.

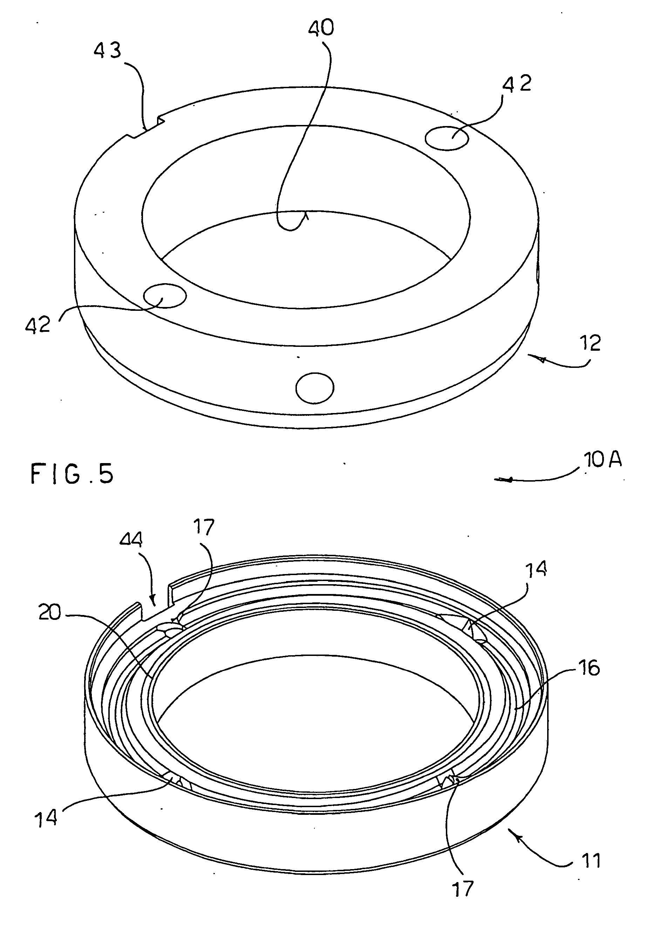

As shown in Figure 5, the inlet holes 14 lead to an annular distribution channel 16 formed in the bottom surface of the top element 11. The distribution channel 16 extends along the entire annular element 11 for an angle of 360°.

Two cusps 17 facing towards the centre of the upper annular element 11 are formed in the distribution channel 16. The cusps 17 are disposed in diametrically opposite positions and spaced 90° from the inlet holes 14. The cusps 17 form a narrowing in the distribution channel 16 and thus serve to avoid stagnation of molten material in the positions furthest from the inlet holes 14.

As shown better in Figure 6, the distribution channel 16 is defined by two substantially elliptical edges 18 and 19, with a major axis passing through the vertical axes of the two inlet holes 14. The inner elliptical edge 19 of the channel 16 joins with the inner circular edge 20 of the top element 11.

In this manner the distribution channel 16 has an area of maximum width near the inlet holes 14 in which there is a greater flow of molten material and narrows gradually until it reaches an area of minimum width near the cusps 17 in which there is a lesser flow of molten material. This configuration of the distribution channel 16 makes it possible to have a constant pressure drop in the molten material, evenly distributed over the whole circumference defined by the inner edge 20 of the top annular element 11.

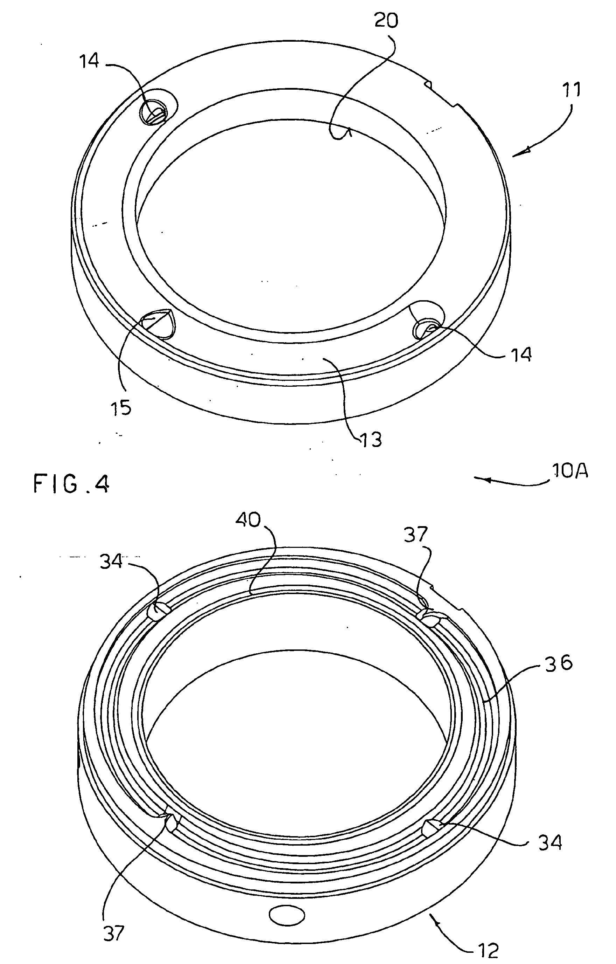

As shown in Figure 4, the bottom element 12 has in its upper surface an annular distribution channel 36, substantially the same as the distribution channel 16 of the top element 11. In this manner, when the top annular element 11 is superimposed on the bottom annular element 12, the two respective distribution channels 16 and 36 match perfectly, forming a single channel with a substantially circular section.

Two upwardly facing cusps or wedges 34 disposed in diametrically opposite positions are formed in the distribution channel 36 of the bottom annular element 12. The cusps 34 are destined to be disposed beneath the inlet holes 14 of the top element 11 and serve to distribute the molten material evenly in the channel 36.

Another two cusps or wedges 37 facing towards the centre of the bottom annular element 12 and disposed in diametrically opposite positions are formed in the distribution channel 36. The cusps 37 are destined to be disposed beneath the cusps 17 of the top element 11 and serve to avoid stagnation of the molten material in the channel 36.

The bottom annular element 12 has an inner top edge 40 destined to couple with the inner bottom edge 20 of the top annular element 11. As shown in Figure 3, between the inner bottom edge 20 of the top annular element 11 and the inner top edge 40 of the bottom annular element 12, a circumferential gap 41 is left, which allows the molten material to emerge in a tubular shape.

A shown in Figure 5, two threaded holes 42 are formed in the bottom surface of the bottom annular element 12, disposed in a diametrically opposite position to receive fixing screws. A slot 43 destined to be disposed to coincide with a corresponding slot 44 disposed in the top element 11 to allow the two elements 11 and 12 to be put in register is provided on the side surface of the bottom element 12.

Hereinunder like or corresponding elements to those already described are designated with the same reference numerals and detailed description thereof is omitted.

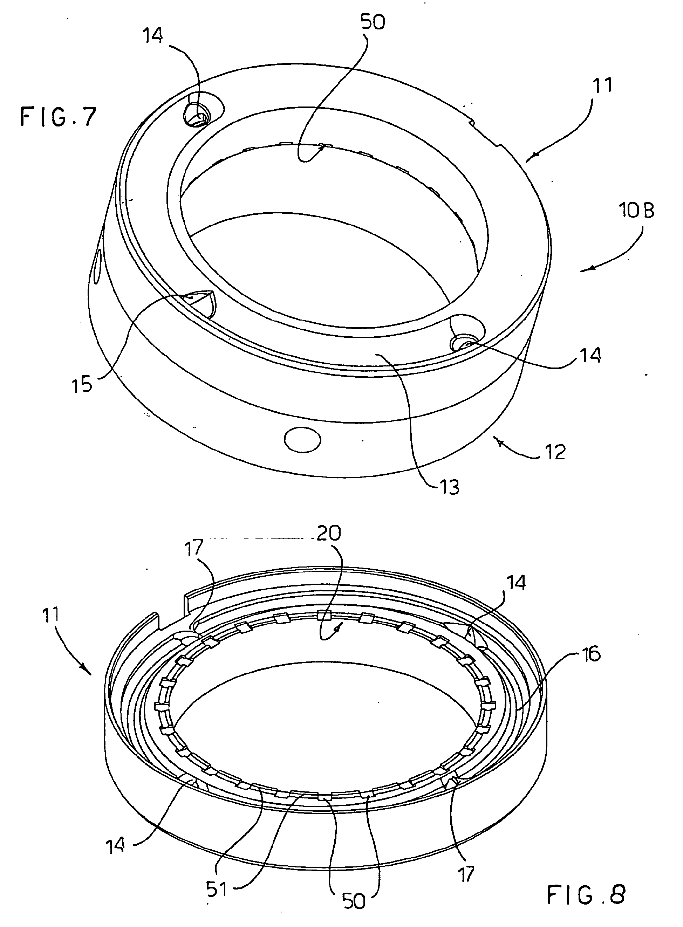

In Figures 7 and 8 an adaptor device designated as a whole with reference numeral 10B is illustrated. The adaptor device 10B can be used for production of coextruded "multi-stripe type" coextruded parisons; Therefore it must be able to provide a plurality of outer vertical stripes of plastic material which are superimposed on the inner tubular layer of material coming from the main extruder 2.

The adaptor device 10B comprises a top annular element 11 and a bottom annular element 12 substantially similar to those of the adaptor 10A. The only difference is represented by the fact that a plurality of slots 50 alternating with a plurality of protruding parts 51 are formed in the inner edge of the top annular element 11.

In this manner, when the top element 11 is assembled on the bottom element 12 of the adaptor 10B, the protruding parts 51 of the inner bottom edge 20 of the top element 11 abut on the inner top edge 40 of the bottom element 12 and thus the molten material can emerge from the distribution channel 16 through the slots 50, so as to form a plurality of vertical lines.

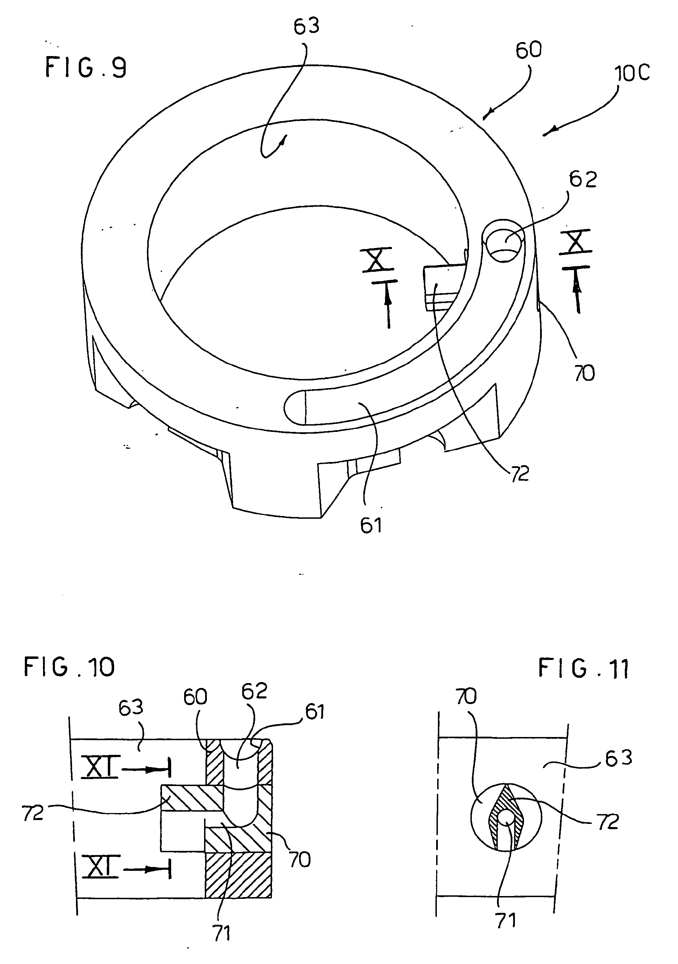

Figures 9 - 11 show an adaptor device designated as a whole with reference numeral 10C. The adaptor device 10C can be used for production of "view stripe type" coextruded parisons, therefore it must be able to provide a transparent stripe of plastic material that is not superimposed on the layer of tubular plastic material coming from the main extruder 2.

The adaptor device 10C comprises a single annular element 60 which has in its top surface an inlet channel 61 which extends for an arc of a circle subtended by an angle of 90° at the centre.

An inlet hole 62 is formed at one end of the channel 61 with a vertical axis which communicates with a distribution duct 71 formed in a distribution block 70 inserted in a radial hole of the side wall of the annular element 60. The radial distribution duct 71 is opened in the inner side surface of the annular element 60. In this manner the distribution duct 71 can open into the annular space 100 (Figure 2) defined between the core 8 and the annular element 60.

The distribution block 70 has a cover 72 disposed above the outlet opening of the radial duct 71. The cover 72 is shaped as an upwardly facing cusp or wedge and protrudes radially towards the centre of in the annular space 100 (Figure 2) until it comes into contact with the core 8 of the extrusion head.

In this manner the tubular flow of molten material coming from the main extruder 2 into the extrusion head is interrupted by the cover 72 of the distribution block 70 and in this position a stripe of transparent plastic material coming from the secondary extruder 3, through the radial duct 71 of the distribution block 70 is formed.

Depending on how the adaptor device 10C is mounted, the transparent stripe can be generated on the right-hand side or on the left-hand side of the parison.

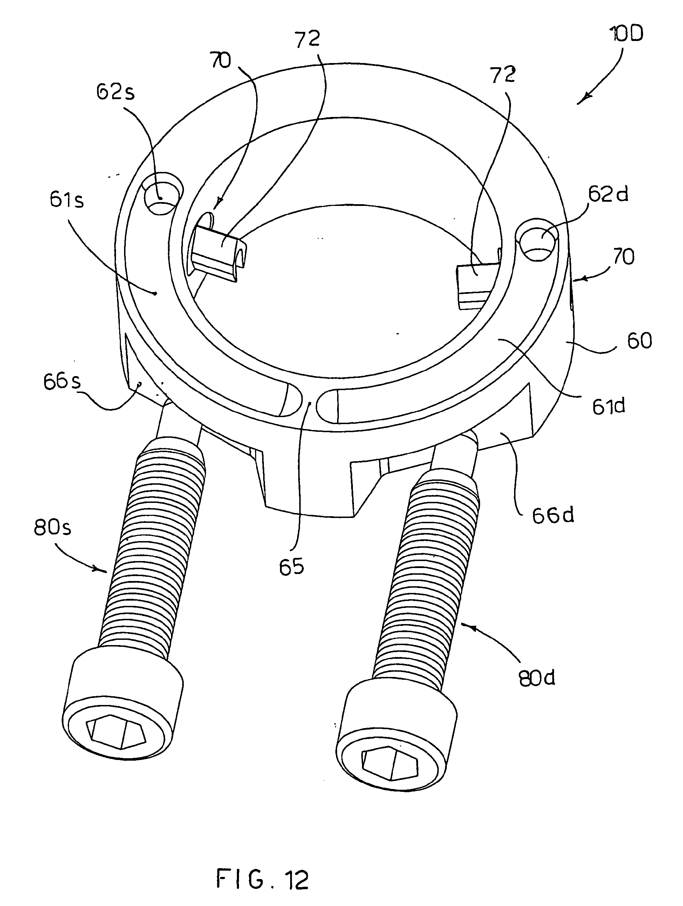

Figure 12 shows an adaptor device according to the invention designated as a whole by reference numeral 10D. The adaptor device 10D can be used for production of "view stripe type" coextruded parisons in which the transparent stripe can be disposed either on the left-hand side or on the right-hand side of the parison without the need to remove the adaptor device 10D.

The adaptor device 10C comprises a single annular element 60 which has in its top surface two inlet channels 61s and 61 d which each extend for an arc of a circle subtended by an angle at the centre of about 90°. The two channels 61s and 61 d are separated from each other by a small dividing wall 65. At the distal ends of the dividing wall 65, the channels 61s and 61d end in respective inlet holes 62s and 62d which lead to respective distribution blocks 70 identical to what was described previously.

Two flat abutment surfaces 66s and 66d disposed on the right and on the left with respect to the dividing wall 65 are formed in the outer lateral surface of the annular element 60. The tips of the respective adjustment screws 80s and 80d adjustable by the user abut on the abutment surfaces 66s and 66d.

In an initial situation, the supply duct for the molten material coming from the auxiliary extruder 3 is situated level with the dividing wall 65 on the annular element 60. Then, by tightening the screw 80d and loosening the screw 80 the annular element 60 is caused to rotate in an anti-clockwise direction with respect to Figure 12. As a result the supply duct will supply the channel 61s and the transparent stripe will be formed in the left-hand side of the parison. Clearly in this case the distribution block 70 beneath the inlet hole 62d is removed.

On the other hand, by tightening the screw 80s and loosening the screw 80d, the annular element 60 is caused to rotate in a clockwise direction with respect to Figure 12. As a result the supply duct will supply the channel 61d and the transparent stripe will be formed in the right-hand side of the parison. Clearly in this case the distribution block 70 beneath the inlet hole 62s is removed.

Numerous changes and modifications of detail within the reach of a person skilled in the art can be made to the present embodiments of the invention without thereby departing from the scope of the invention as set forth in the appended claims.

## Claims

1. An adaptor device (10D) for a continuous extrusion head for blow-moulding of parisons, the extrusion head (1) comprising:
- a main extruder (2) which, through a distributor (7), feeds the molten material into a tubular space (9) defined by a core or male (8) disposed inside the extrusion head (1), and
- a secondary extruder (3) which, through a distributor, feeds the molten material into said adaptor device (10),
said adaptor device (10)comprising a single annular element (60)
- having a substantially annular shape,
- being mounted in the extrusion head and disposed around said core (8) of the extrusion head, so as to form an annular space (100) for passage of molten material between its inner side surface and the outer side surface of the core (8), and
- comprising at least one inlet (61 s, 61 d) supplied by the distributor of said secondary extruder (3) and communicating with at least one outlet (71) opening into said annular space (100),
**characterized in that**
it comprises two inlet channels (61s, 61d) formed on the top surface thereof and separated by a dividing wall (65), ending in respective inlet holes (62s, 62d) distal to the dividing wall (65),
- said inlet holes (62s, 62d) communicating with respective radial distribution channels (71) which open beneath respective covers (72) extending radially in said annular space (100) to allow a view stripe type construction, in diametrically opposite positions,
- said annular element (60) being rotatable to direct the molten material into one of said two inlet channels (61s, 61d).

2. An adaptor device (10D) according to claim 1, **characterized in that** in the side wall of said annular element (60) are formed two flat abutment surfaces (66s, 66d) on which the tips of respective adjustment screws (80s, 80d) act to control rotation of the annular element (60).

3. An adaptor device (10D) according to claim 1 or 2, **characterized in that** said at least one inlet (61s, 61d) comprises at least one channel (61s, 61d) shaped as an arc of a circle communicating with at least one inlet hole (62s, 62d) which leads to a distribution channel (71) formed in said adaptor device and communicating with said outlet (41; 50; 71) of the adaptor device.

4. A continuous extrusion head for blow-moulding of parisons, **characterized in that** it comprises an adaptor device (10D) according to any one of the preceding claims.

## Patentansprüche

1. Adaptorvorrichtung (10D) für einen Extrusionskopf für das Blasformen von Vorformlingen, der Extrusionskopf (1) umfassend:
- einen Hauptextruder (2), der das geschmolzene Material über einen Verteiler (7) in einen röhrenförmigen Raum (9) zuführt, der durch einen Kern oder Stecker (8) innerhalb des Extrusionskopfs (1) definiert ist, und
- einen Nebenextruder (3), der das geschmolzene Material über einen Verteiler in die Adaptorvorrichtung (10) zuführt,
wobei die Adaptorvorrichtung (10) ein einzelnes ringförmiges Element (60) umfasst, das
- eine im Wesentlichen ringförmige Form aufweist,
- derart in dem Extrusionskopf angebracht ist und um den Kern (8) des Extrusionskopfs angeordnet ist, dass es einen ringförmigen Raum (100) zum Durchgang von geschmolzenem Material zwischen seiner Innenfläche und der Außenfläche des Kerns (8) ausbildet, und
- zumindest einen Einlass (61s, 61d) umfasst, der von dem Verteiler des Nebenextruders (3) gespeist ist und mit zumindest einer Auslassöffnung (71) in den ringförmigen Raum (100) in Verbindung steht,
**dadurch gekennzeichnet, dass**
sie zwei Einasskanäle (61s, 61d) umfasst, die auf der oberen Oberfläche davon ausgebildet sind und durch eine Trennwand (65) getrennt sind und in jeweiligen Einlasslöchern (62s, 62d) distal von der Trennwand (65) enden,
- wobei die Einlasslöcher (62s, 62d) mit jeweiligen radialen Verteilungskanälen (71) in Verbindung stehen, die unterhalb von jeweiligen Abdeckungen (72) münden, welche radial in dem ringförmigen Raum (100) zum Ermöglichen eines Sichtstreifenbaus in diametral gegenüberliegenden Positionen verlaufen,
- wobei das ringförmige Element (60) zum Leiten des geschmolzenen Materials in einen der zwei Einlasskanäle (61 s, 61 d) drehbar ist.

2. Adaptorvorrichtung (10D) nach Anspruch 1, **dadurch gekennzeichnet, dass** in der Seitenwand des ringförmigen Elements (60) zwei flache Angrenzflächen (66s, 66d) ausgebildet sind, an denen die Spitzen der jeweiligen Stellschrauben (80s, 80d) zum Steuern der Drehung des ringförmigen Elements (60) wirken.

3. Adaptorvorrichtung (10D) nach einem der Ansprüche 1 oder 2, **dadurch gekennzeichnet, dass** zumindest ein Einlass (61s, 61d) zumindest einen Kanal (61s, 61d) umfasst, der als Kreisbogen geformt ist und mit zumindest einem Einlassloch (62s, 62d) in Verbindung steht, welches zu einem Verteilungskanal (71) führt, der in der Adaptorvorrichtung ausgebildet ist und mit dem Auslass (41; 50; 71) der Adaptorvorrichtung in Verbindung steht.

4. Extrusionskopf für das Blasformen von Vorformlingen, **dadurch gekennzeichnet**, das er eine Adaptorvorrichtung (10D) nach einem der vorhergehenden Ansprüche umfasst.

## Revendications

1. Dispositif adapteur (10D) destiné à une tête d'extrusion en continu pour moulage par soufflage de paraisons, la tête d'extrusion (1) comprenant:
- une extrudeuse principale (2) qui, via un distributeur (7), alimente la matière fondue dans un espace tubulaire (9) défini par un noyau ou un mâle (8) disposé à l'intérieur de la tête d'extrusion (1), et
- une extrudeuse secondaire (3) qui, via un distributeur, alimente la matière fondue dans ledit dispositif adapteur (10),
ledit dispositif adapteur (10) comprenant un élément annulaire unique (60)
- présentant une forme essentiellement annulaire,
- monté dans la tête d'extrusion et disposé autour dudit noyau (8) de la tête d'extrusion de façon à former un espace annulaire (100) pour le passage de matière fondue entre sa surface latérale intérieure et la surface latérale extérieure du noyau (8), et
- comprenant au moins une entrée (61s, 61d) fournie par le distributeur de ladite extrudeuse secondaire (3) et communiquant avec au moins une sortie (71) ouvrant dans ledit espace annulaire (100),
**caractérisé en ce qu'**il comprend deux canaux d'entrée (61s, 61d) formés sur la surface supérieure de celui-ci et séparés par une cloison séparatrice (65), terminant dans des trous d'entrée respectifs (62s, 62d) distaux par rapport à la cloison séparatrice (65),
- lesdits trous d'entrée (62s, 62d) communiquant avec des canaux de distribution radiaux respectifs (71) qui ouvrent en-dessous de couvercles respectifs (72) s'étendant radialement dans ledit espace annulaire (100) pour permettre une construction de type bande d'observation dans des positions diamétralement opposées,
- ledit élément annulaire (60) pouvant tourner pour diriger la matière fondue dans l'un des deux canaux d'entrée (6 1 s, 61d),

2. Dispositif adapteur (10D) selon la revendication 1, **caractérisé en ce que** deux surfaces de butée planes (66s, 66d) sont formées dans la paroi latérale de l'élément annulaire (60), sur lesquelles les pointes de vis de réglage respectives (80s, 80d) agissent pour commander la rotation de l'élément annulaire (60).

3. Dispositif adapteur (10D) selon la revendication 1 ou 2, **caractérisé en ce que** l'au moins une entrée (61s, 61d) comprend au moins un canal (61 s, 61d) formé en tant qu'un arc de cercle communiquant avec au moins un trou d'entrée (62s, 62d) qui conduit à un canal de distribution (71) formé dans ledit dispositif adapteur et communiquant avec ladite sortie (41 ; 50 ; 71) du dispositif adapter.

4. Tête d'extrusion en continu pour moulage par soufflage de paraisons, **caractérisée en ce qu'**elle comprend un dispositif adapteur (10D) selon l'une quelconque des revendications précédentes.
